# EUROPEAN PATENT APPLICATION

(11) **EP 2 851 924 A1**
(43) Date of publication of application: **25.03.2015**
(21) Application number: 13770140.5
(22) Date of filing: 14.03.2013
(51) Int. Cl.: H01H 37/76

(54) **PROTECTION ELEMENT**

(30) Priority: 26.03.2012 JP 2012069658
(71) Applicant: Dexerials Corporation, Tokyo 141-0032 (JP)
(72) Inventor: KIMURA, Yuji, Shinagawa-ku, Tokyo 141-0032 (JP); MUKAI, Kouichi, Shinagawa-ku, Tokyo 141-0032 (JP); FURUUCHI, Yuji, Shinagawa-ku, Tokyo 141-0032 (JP)
(74) Representative: Müller Hoffmann & Partner
(86) International application number: PCT/JP2013/057162
(87) International publication number: WO 2013/146290

(57) **Abstract**

To provide a protection element, which evens the amount of flux on a fusible conductor and improves variations in fusing characteristics, even if voids occur in the flux which cause variations in the amount of the flux coated on the fusible conductor. A protection element (10) is provided with: an insulated substrate (11); a heating body (14); an insulating member (15); two electrodes (12); a heating body internal electrode (16); a fusible conductor (13) which is stacked over the two electrodes (12) from the heating body internal electrode (16) and fuses a current path between the two electrodes (12) by heating; a flux (17) coated on the fusible conductor (13) so as to superimpose on the heating body; and a cover member (1) attached to the insulated substrate covering at least the fusible conductor. The cover member (1) has a cylindrical protrusion (2) formed on an inner surface (1a) of the cover member (1) so as to contact the flux (17), and a communication hole (3) communicating with the inner surface (1a) side of the cover member (1) from the protrusion (2) is opened on a side wall surface of the cover member (1).

## Description

### Field of the Invention

The present invention relates to a protection element protecting a circuit connected onto a current path by fusing the current path.

This application claims priority to Japanese Patent Application No. 2012-069658 filed on March 26, 2012, the entire contents of which are incorporated by reference herein.

### Background of the Invention

The most of rechargeable and iteratively usable secondary batteries are fabricated in the form of a battery pack to provide a user. Preferably, in a lithium ion secondary battery having high weight energy density, several protection circuits, such as an overcharging protection circuit or an over-discharging protection circuit or the like are typically built in the battery pack, in order to ensure the safety of a user and electronic equipment. The lithium ion secondary battery has a capability of shutting down an output from the battery pack upon occurrence of predetermined emergencies.

An overcharging protection operation or an over-discharging protection operation is performed to the battery pack by turning ON/OFF an output from the battery pack by using a FET switch built in the battery pack. The battery pack and the electronic equipment must be protected from unexpected sudden accidents, such as firing or the like, even when the FET switch is short-circuited and damaged for some sort of causes, when lightning surge or the like is applied and large current is instantaneously flown, when an output voltage is unusually dropped due to the dead of the battery pack, or conversely when an abnormal over voltage is output. To this end, it has been used so far a protection element consisting of fuse elements having a capability of shutting down a current path, in response to a signal from the outside, in order for an output from the battery pack to securely shut down, even in any predictable abnormal state, such as those described above.

As a protection element of the protection circuit for such lithium ion secondary battery or the like, it is generally known a structure in which a heating body is provided within the protection element, by which a fusible conductor provided on a current path is fused, as disclosed in Patent Document 1.

### Prior Art Document

### Patent Document

PLT1: Japanese Patent Application Laid-Open No. 2010-3665

### Summary of the Invention

In the protection element disclosed in Patent Document 1, a flux is coated onto a surface of a fusible conductor (fuse) made of a low-fusing metal, for the sake of antioxidation, fusing acceleration, and improvement of fusing characteristics. Further, a cover member is provided so as to cover a substrate consisting the protection element for quality assurance of the protection element. Uniformly coating the flux on the fusible conductor allows for a uniform heat generation distribution of the fusible conductor, which reduces variations in fusing characteristics of the fusible conductor. For this purpose, the cover member has a cylindrical protrusion in an inner surface of the cover member so as to enclose the center on the fusible conductor, for the purpose of maintaining the coated flux for making the amount of flux coated on the fusible conductor uniform.

However, even when the cylindrical protrusion is provided on the fusible conductor, a problem emerges that if void (air bubble) exists in the flux, the amount of flux undergoes a change depending on where the void is generated, occurring variations in the fusing characteristics. To deal with this problem, Patent Document 1 discloses a protection element in which a notch is formed in the cylindrical protrusion for discharging the void. However, such a measure causes another problem that not only the void but also the flux flows out from the notch formed in the cylindrical protrusion, resulting in occurring variations in the amount of flux coated on the fusible conductor.

An object of the present invention is to implement a protection element in which the amount of flux is uniformly distributed to thereby improving the variations in the fusing characteristics, even if void is generated in the flux coated onto the fusible conductor.

Namely, as a means for resolving the foregoing problem, the protection element according to the present invention comprises: an insulated substrate; a heating body stacked on the insulated substrate; an insulating member stacked on the insulated substrate so as to cover at least the heating body; first and second electrodes stacked on the insulated substrate on which the insulating member is stacked; a heating body internal electrode which is stacked on the insulating member so as to superimpose on the heating body, and is electrically connected on a current path between the first and second electrodes and to the heating body; a fusible conductor which is stacked from the heating body internal electrode to the first and second electrodes, and fuses a current path between the first and second electrodes by heating; a flux coated on the fusible conductor so as to superimpose on the heating body; and a cover member attached to the insulated substrate covering at least fusible conductor, wherein the cover member has a circular protrusion formed so as to contact the flux on an inner surface of the cover member opposingly to the heating body, and a communication hole communicating with an inner surface side of the cover member from the inside of the protrusion is opened on a wall surface of the circular protrusion.

### Advantageous effect of the Invention

Since the present invention is configured such that the cover member has the circular protrusion which is formed so as to contact the flux opposingly to the heating body, and the communication hole communicating with an inner surface side of the cover member from the inside of the protrusion is opened to a wall surface of the circular protrusion, the invention allows void generated in the flux to be discharged through the communication hole. The discharge of the void is instrumental in forming a uniform flux coated onto the fusible conductor, which creates a uniform heat generation distribution of the fusible conductor, thereby reducing the variations in the fusing characteristics.

### Brief Description of the Drawings

Fig. 1A is a cross-sectional view taken along a line A-A' of a cover member consisting a protection element to which the present invention is applied.
Fig. 1B is a bottom view of the cover member.
Fig. 2A is a plan view showing a state where a cover member is removed for showing a structure of a protection element to which the present invention is applied.
Fig. 2B is a cross-sectional view taken along a line B-B' for showing a structure of the protection element in a state where the cover member is attached to the protection element of Fig. 2A.
Fig. 3 is a block diagram showing an application example of a protection element to which the present invention is applied.
Fig. 4 is a view showing an example of a circuit configuration of a protection element to which the present invention is applied.
Fig. 5A is a cross-sectional view taken along a line A-A' of a cover member consisting a conventional protection element.
Fig. 5B is a bottom view of the cover member consisting the conventional protection element, that is, a conceptual diagram simultaneously showing a state where a flux and void generated in the flux are discharged.
Fig. 5C is a cross-sectional view of the protection element.
Fig. 6A is a cross-sectional view taken along a line A-A' of a cover member consisting a protection element to which the present invention is applied.
Fig. 6B is a bottom view of the protection element, that is, a view conceptionally showing a state where void generated in a flux is discharged through a communication hole.
Fig. 7A is a cross-sectional view showing an example of a communication hole opened to a wall surface of a protrusion of a cover member.
Fig. 7B is a cross-sectional view showing another example of a communication hole opened to a wall surface of a protrusion of a cover member.
Fig. 8A is a cross-sectional view of a cover member showing one of modifications out of embodiments of a protection element of the cover member.
Fig. 8B is a bottom view of the cover member.
Fig. 9A is a cross-sectional view of a cover member showing one of modifications out of embodiments of a protection element of the present invention.
Fig. 9B is a bottom view of the cover member.
Fig. 10 is a view showing a protrusion supported by a columnar supporting member according to the modification shown in Fig. 9.
Fig. 10A is a perspective view of the protrusion.
Fig. 10B is a plan view of the protection element.
Fig. 10C is a front view of the protection element.

### Detailed Description of the Invention

Hereinafter, embodiments of the present invention will be described in detail with reference to the accompanying drawings. It is needless to say that the present invention is not necessarily intended to be limited the present invention to the following embodiments, and thus various modifications may be made within the scope without departing from the gist of the present invention.

### [Structure of protection element]

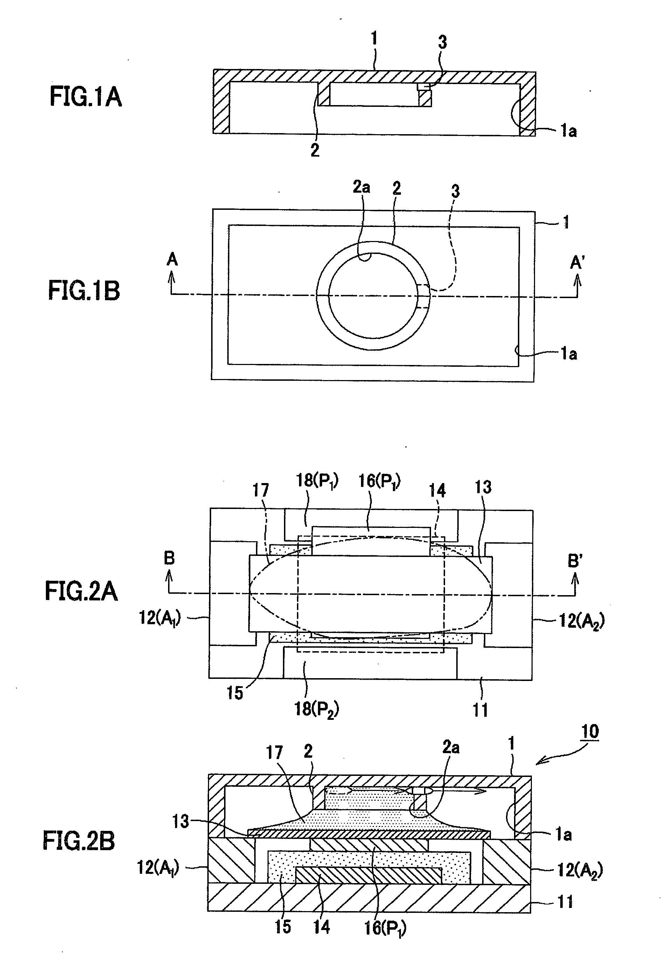

As shown in Fig. 1A, 1B, 2A and 2B, a cover member 1 has in its inner surface 1a a protrusion 2 whose head is arranged at a position opposite to a position of a heating body 14. The protrusion 2 takes the inner surface 1a of the cover member 1 as a bottom surface and presents cylindrical geometry whose head is opened. The cylindrical protrusion 2 is arranged at a position opposite to a rectangular heating body 14 via a fusible conductor 13 when the cover member 1 is attached by putting it over the body of the protection element 10. The height of the cylindrical protrusion 2 is defined so that a head of the cylindrical protrusion 2 comes to a position where the head contacts a surface of the flux 17 coated on a surface of the fusible conductor 13. An inner surface 2a of the cylindrical protrusion 2 is formed into a space where the flux 17 is drawn by dint of surface tension to which the head is contacted, and filled with the flux 17. A wall surface of the inner surface 2a may be smooth or may be finished in a pearskin texture to impart roughness thereon. On a wall surface of the protrusion 2, a communication hole 3 communicating with an inner surface 2a of the protrusion 2 and an inner surface side 1 a of the cover member 1 is opened. The cover member 1 is used for protecting the inside of the protection element 10 and is made of insulating materials. For example, it may use insulating materials having specified heat resisting properties, such as glass epoxy and ceramics or the like. It is common to integrally form the cover member 1 including the protrusion 2 by utilizing the injection molding technique. Alternatively the protrusion 2 may be formed, as a separate component, at a proper position of the inner surface 1a of the cover member 1 by gluing or inlaying or the like.

As shown in Fig. 2A, the body of the protection element 10 comprises an insulated substrate; a heating body 14 stacked on the insulated substrate 11 and covered by an insulating member 15; an electrode 12(A₁) and 12(A₂) provided at the both ends of the insulated substrate 11; a heating body internal electrode 16 stacked on the insulated substrate 15 so as to superimpose on the heating body 14; and a fusible conductor 13 whose both ends are connected to electrodes 12 (A₁) and 12 (A₂), whose center is connected to the heating body internal electrode 16. On the fusible conductor 13, a flux 17 is coated. As shown in Fig. 2B, the protection element 10 according to the present invention is formed as a whole by putting the cover member 1 shown in Fig. 1 over the insulated substrate 11 of the body of the protection element 10. When the cover member 1 is put over the insulated substrate 11, the cylindrical protrusion 2 contacts a surface of the flux 17, and the inside of the cylindrical protrusion 2 is filled with the flux 17 by dint of surface tension of the flux 17.

The rectangular insulated substrate 11 is made, for example, of member having insulation properties, such as alumina, glass ceramics, mullite, and zirconia. Other than the above, materials used for a print circuit board, such as a glass epoxy substrate and a phenol substrate or the like may be used, but it needs to take notice of temperature on fuse fusing.

The heating body 14 is a member which has a relatively high resistance value and generates heat upon energization. For example, the heating body 14 is made of W, Mo, and Ru or the like. The heating body 14 is fabricated through the following processes. Powder body of these alloy, composition, and compound are mingled with a resin binder or the like to produce a paste-like material. Then, the paste-like material is formed, in a pattern form, on the insulated substrate 11 by the screen printing technology, followed by firing or the like.

The insulating member 15 is disposed so as to cover the heating body 14, and the heating body internal electrode 16 is arranged so as to be opposite to the heating body 14 via the insulating member 15.

One end of the heating body internal electrode 16 is connected to one heating body electrode 18 (P₁). Further, one end of the heating body 14 is connected to the other heating body electrode 18 (P₂).

The fusible conductor 13 may be made of a conductive material which is melted and fused by predetermined electric power and heat. For example, BiSn alloy, BiPb alloy, BiSn alloy, SnPb alloy, PbIn alloy, ZnAl alloy, InSn alloy, and PbAgSn alloy or the like may be available therefor.

The flux 17 has low viscosity, and when the flux 17 is coated on the fusible conductor 13, the flux 17 is almost uniformly spread and distributed thereover, at the time of manufacture of the protection element 10. With the lapse of time, a solvent contained in the flux 17 is volatilized and viscosity thereof will increase accordingly.

### [Use of protection element]

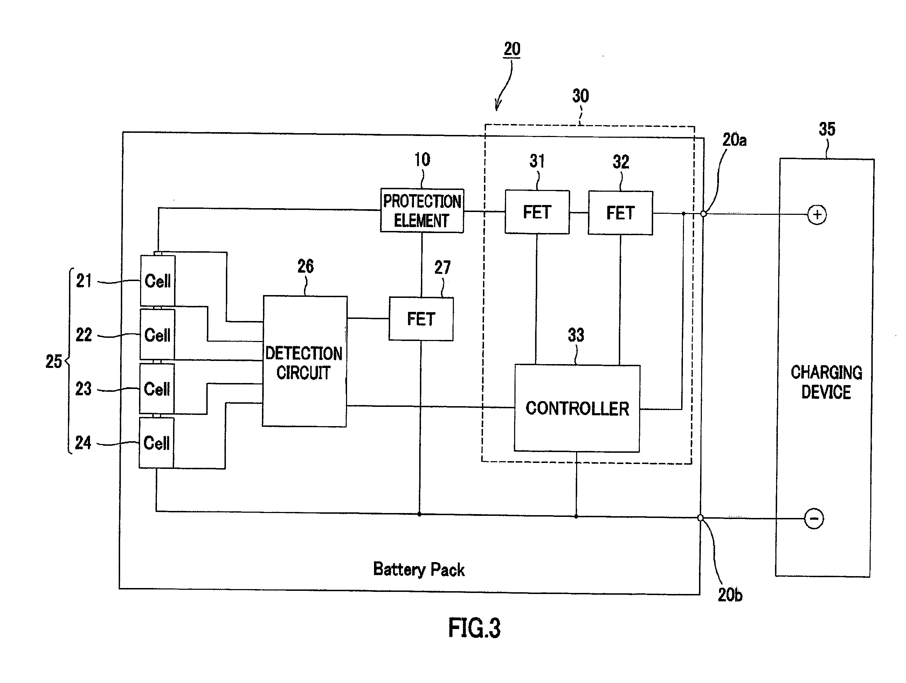

As shown in Fig. 3, the aforesaid protection element 10 is used for a circuitry within a battery pack of a lithium ion secondary battery.

For example, the protection element 10 is used by being embedded into a battery pack 20 having a battery stack 25 composed of totally 4 lithium ion secondary batteries of battery cells 21 to 24.

The battery pack 20 includes a battery stack 25; a discharging and charging control circuit 30 controlling discharge and charge of the battery pack 25; a protection element 10 which protects the battery stack 25 and the discharging and charging control circuit 30, and to which the present invention is applied; a detection circuit 26 detecting a voltage of each battery cell 21 to 24; and a current control element 27 controlling a behavior of the protection circuit 10 depending on detection results obtained by the detection circuit 26.

The battery stack 25 is that in which the battery cells 21 to 24 are serially connected to one another and which is required to control for protection of over-discharging and overcharging states. The battery stack 25 is connected to a charging device 35 via a positive electrode terminal 20a and a negative electrode terminal 20b of the battery pack 20, and charge voltage is applied from the charging device 35. Connecting the battery pack 20 charged by the charging device 35 to the electronics which is activated by the positive electrode terminal 20a and the negative electrode terminal 20b enables activation of the electronics.

The discharging and charging control circuit 30 includes two electric current control elements 31 and 32 serially connected to a current path through which an electric current flows to the charging device 35 from the battery stack 25, and a controller 33 controlling behavior of the electric current control elements 31 and 32. The electric current control elements 31 and 32 are configured, for example, by a Field-Effect Transistor (hereinafter, referred to as a "FET" for brevity's sake). Conduction and disconnection of the current path from the battery stack 25 are controlled by controlling a gate voltage with the controller 33. The controller 33 is activated upon reception of power supply from the charging device 35. The controller 33 controls behavior of the current control elements 31 and 32 so as to shut down the current path, when the battery stack 25 is in an over-discharging or an overcharging state, depending on the detection results obtained by the detection circuit 26.

The protection element 10 is, for example, connected on a discharge and charge current path between the battery stack 25 and the discharging and charging control circuit 30, and a behavior thereof is controlled by the current control element 27.

The detection circuit 26 is connected to each battery cell 21 to 24 to detect a voltage value of the each battery cell 21 to 24, and the each voltage value is supplied to the controller 33 of the discharging and charging control circuit 30. Moreover, the detection circuit 26 outputs a control signal controlling the current control element 27 when at least one of the battery cells 21 to 24 falls into an overcharge voltage or an over- discharge voltage.

The current control element 27 activates the protection element 10 when a voltage value of the each battery cell 21 to 24 runs up to a voltage exceeding a predetermined over-discharging state or an overcharging state, in response to a detection signal output from the detection circuit 26. The current control element 27 controls to shut down an over-discharging and charging current path of the battery stack 25 without relying upon a switching operation of the current control elements 31 and 32.

A specific description will be made to a structure of the protection element 10 in the battery pack 20 having such a configuration as above.

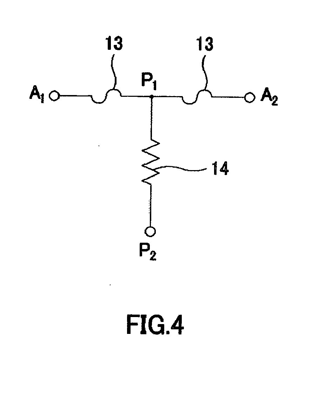

The protection element 10 to which the present invention is applied has a circuit configuration as shown, for example, in Fig. 4. That is, the protection element 10 has a circuit configuration including a fusible conductor 13 serially connected via a heating body internal electrode 16, and a heating body 14 fusing the fusible conductor 13 by energizing through a junction point of the fusible conductor 13 for heating. Further, in the protection element 10, the fusible conductor 13 is, for example, serially connected on a discharging and charging current path and the heating body 14 is connected to the current control element 27. Out of two electrodes 12(A₁) and 12(A₂) of the protection element 10, one is connected to A1 and the other is connected to A2. Moreover, the heating body internal electrode 16 and a heating body electrode 18 connected thereto are connected to P1, and the other heating body electrode 18 is connected P2.

The protection element 10 having such a circuit configuration realizes the height reduction and at the same time can ensure fusing of the fusible conductor 13 on a current path.

### [Capability of cover member]

Prior to making reference to a capability of the cover member 1 used for the protection element 10 according to the present invention, a description will be made to a capability of the cover member of the conventional protection element.

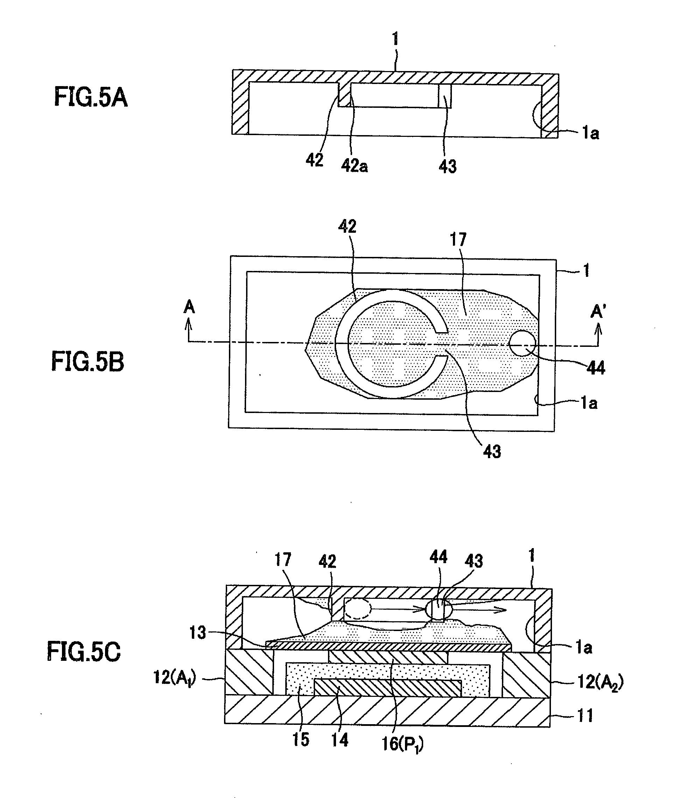

As shown in Figs. 5A and 5B, a cover member 1 of the conventional protection element has a protrusion 42 arranged to an inner surface 1a of the cover member 1, at a position opposite to a position where the heating body 14 is disposed. The protrusion 42 is formed in cylindrical geometry. The protrusion 42 whose bottom surface is formed of an inner surface 1a of the cover member 1 has an inner surface 42a, and its head is opened. An area of the head of the protrusion 42 is set to cover approximately 80% of an area of the rectangular heating body 14 opposite to the protrusion 42. In some cases, void (air bubble) 44 is occasionally generated in the flux 17 when the flux 17 is drawn by dint of surface tension so as to fill a space formed of the inner surface 42a of the protrusion 42, or when the flux 17 is coated on the fusible conductor 13. In the event the void 44 stays in the protrusion 42, the flux 17 unevenly distributes in the protrusion 42, and impairs uniformity of the flux 17 on the fusible conductor 13. Consequently, an ununiform heat generation distribution will occur in the fusible conductor 13 due to the heating body 14, and causes variations in the fusing characteristics of the fusible conductor 13.

As shown in Fig. 5B, the cover member 1 has a notch 43 formed towards the inner surface 1a of the cover member 1 that is a bottom surface of the protrusion 42 from a head of the protrusion 42.

As shown in Fig. 5C, void 44 at a position represented by a broken line, which is generated in the flux in the protrusion 42 is discharged to the inner surface 1 a side of the cover member 1 through the notch 43 with the aid of buoyancy. Nonetheless, the flux 17 flows out on the fusible conductor 13 through the notch 43, as at a position where the notch 43 is formed, surface tension does not act between the head of the protrusion 2 and the flux 17. On this account, the amount of flux 17 held at the protrusion 42 decreases, leading to arising a difference in a coating amount of the flux 17 on the fusible conductor 13. As a result, an uneven heat generation distribution occurs at a position corresponding to the heating body 14 on the fusible conductor 13. It will cause variations in the fusing characteristics of the fusible conductor 13.

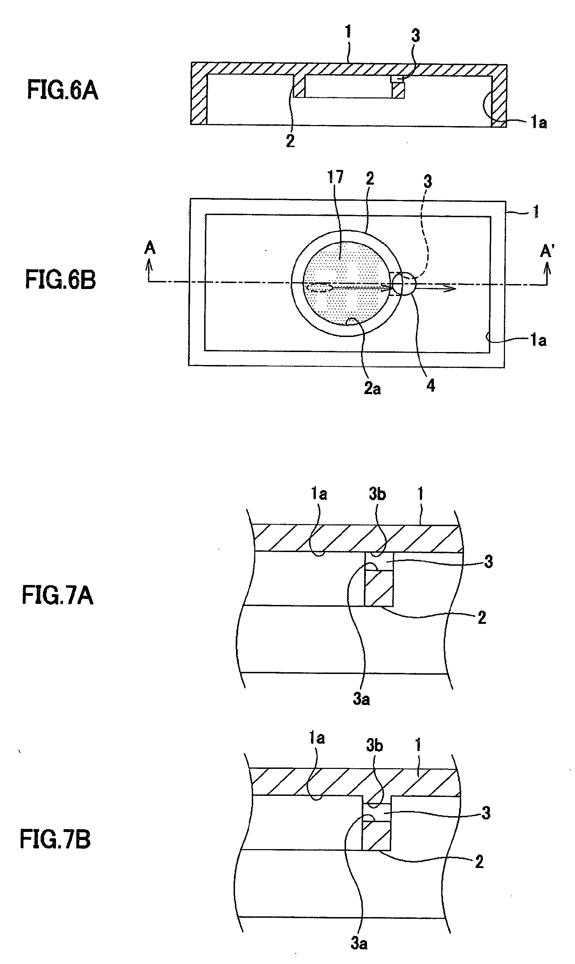

As shown in Fig. 6A, since the protection element 10 according to the present invention, the protrusion 2 is provided so that the flux 17 contacts a whole circumference of the head of the protrusion 2 of the cover member 1 opposingly to the heating body 14, the provision enables a sufficient amount of flux 17 to be drawn, over a large area, enough to fully cover a surface area of the heating body 14. Moreover, as shown in Fig. 6B, since the communication hole 3 communicating with the inner surface 1a side of the cover member 1 from the inner surface 2a of the protrusion 2 is opened to the cylindrical protrusion 2, void 4 generated in the flux 17 is discharged toward the inner surface 1a of the cover member 1 from the inside of the protrusion 2 through the communication hole 3 with the aid of buoyancy. Accordingly, only the void 4 is discharged through the communication hole and the flux 17 stays at a position corresponding to the heating body 14 on the fusible conductor 13 with a uniform amount.

Herein, as shown in Fig. 7A, the communication hole 3 formed on a wall surface of the protrusion 2 is surroundingly formed by a surface 3a of a head side of the protrusion 2 of communication hole 3, a surface 3b of the cover member 1 side, and a side (not shown). In this instance, it is preferable for the surface 3b of the cover member 1 side to be on the same surface as the inner surface 1a of the cover member 1. As shown in Fig. 7B, in a case where the surface 3b of the cover member 1 side of the communication hole 3 is formed to have a step from the inner surface 1a of the cover member 1, an attention should be paid to a point that it becomes hard to discharge the void 4, as the step will act as a barrier to the void 4 migrated with the aid of buoyancy to the inner surface 1a side of the cover member 1. Besides, if a thickness of a portion corresponding to a bottom surface in a cylindrical protrusion 46 out of the inner surface 1a of the cover member 1 is set so as to gradually increase with an inclination from the communication hole 3, the generated void is guided towards the communication hole 3, thus facilitating discharge of the void.

In the above configuration, it goes without saying that geometry of the communication hole is not necessarily limited to rectangular, but may be elliptic or any geometry.

### [Modification 1]

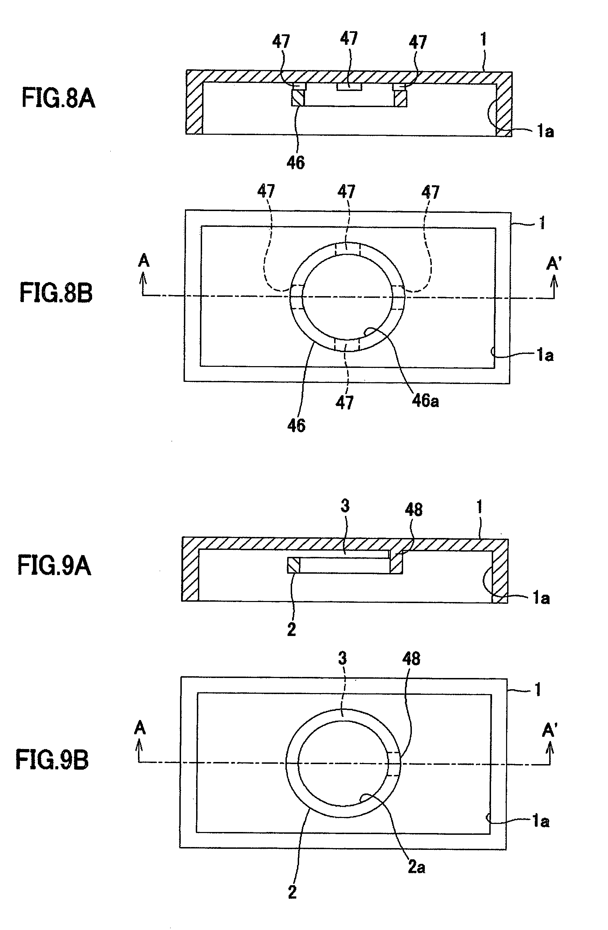

A communication hole 47 opened to a wall surface of the protrusion 46 may be plural, not necessarily limited to one. As shown in Figs. 8A and 8B, 4 communication holes may be opened being separated from one another at equal intervals on a circumference of the protrusion 46. The void in the flux 17 of the protrusion 46 migrates with the aid of buoyancy within an inner surface 46a side of the protrusion 46, and thus an increase in the number of portion where the communication hole 47 opens enables effective discharge of the void stayed in the protrusion 46.

### [Modification 2]

An increase in an opening area of the communication hole allows for more effective discharge of the void stayed in the flux 17 of the protrusion. As shown in Figs. 9A and 9B, an end of the cover member 1 is either opened and the cover member 1 has the cylindrical protrusion 2 having an inner surface 2a and a columnar supporting member 48 whose one end is connected to a portion of the surface 2c of the inner surface 1a side of the cover member 1 of the protrusion 2. Then, the other end of the columnar supporting member 48 is connected to the inner surface 1 a of the cover member 1. In the cover member 1 of the modification, the protrusion 2 is supported by the columnar supporting member 48, and a communication hole 3 is formed in a slit shape between a surface 2c at the side which does not contact the flux 17 of the protrusion 2 and the inner surface 1a of the cover member 1. The formation of the protrusion 2 allows the void 4 in the flux 17 generated in the inner surface 2a side of the protrusion 2 to be discharged to the inner surface 1a side of the cover member 1 in almost all the directions.

Meanwhile, a circumferential surface at the side contacting the flux 17 of the protrusion 2 can contact the flux 17 over the entire surface. Hence, it makes it possible to evenly draw the flux 17 on the fusible conductor 13 without taking the trouble of forming an outflow path for the flux 17.

The protrusion 2 and the columnar supporting member 48 connected to the protrusion 2, as shown in Figs. 9A and 9B, can be integrally formed with the cover member 1 utilizing the injection molding technique.

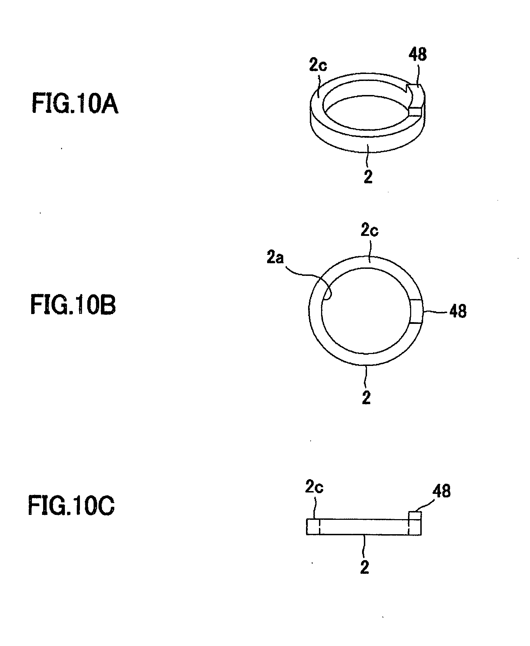

Alternatively, as shown in Figs. 10A to 10C, it may also be feasible to fabricate the cover member 1 by integrally molding individually a protrusion member composed of the protrusion 2 and a columnar supporting portion 48, and then by connecting the protrusion member to a cover member with no separately integrally molded protrusion.

In the above configuration, the descriptions were made in view of mathematical common sense that the figure having the maximum area relative to the same peripheral length is a circle, the protrusion assumed the circular shape as an annular protrusion. However, it is needless to say that the protrusion may be an elliptic cylinder, a triangular cylinder, and another polygonal cylinder, not necessarily limited to cylindrical.

### Reference Sign List

1... cover member
1a ...inner surface of cover member
2,42,44,46 to 57...protrusion
2a, 42a to 49a...inner surface of protrusion
10...protection element
11...insulated substrate
12... electrode
13... fusible conductor
14...heating body
15...insulating member
16...heating body internal electrode
17...flux
18...heating body electrode
20... battery pack
20a...positive electrode terminal
20b...negative electrode terminal
21 to 24...battery cell
25...battery stack
26... detection circuit
27, 31, 32...circuit control element
30...discharging and charging control circuit
33... controller
35...charging circuit

## Claims

1. A protection element comprising:
an insulated substrate;
a heating body stacked on the insulated substrate;
an insulating member stacked on the insulated substrate so as to cover at least the heating body;
first and second electrodes stacked on the insulated substrate on which the insulating member is stacked;
a heating body internal electrode which is stacked on the insulating member so as to superimpose on the heating body, and is electrically connected on a current path between the first and second electrodes and to the heating body;
a fusible conductor which is stacked from the heating body internal electrode to the first and second electrodes, and fuses a current path between the first and second electrodes by heating;
a flux coated on the low fusing metal so as to superimpose on the heating body; and
a cover member attached to the insulated substrate covering at least the low fusing metal,
wherein the cover member has a circular protrusion formed so as to contact the flux on an inner surface of the cover member opposingly to the heating body, and
a communication hole communicating with an inner surface side of the cover member from the inside of the protrusion is opened on a wall surface of the circular protrusion.

2. The protection element according to claim 1, wherein
a plurality of communication holes are opened to the circular protrusion.

3. The protection element according to claim 2, wherein
the circular protrusion is formed in cylindrical geometry, and the plurality of communication holes are opened being separated from one another at equal intervals on a circumference of the cylindrical protrusion.

4. The protection element according to any one of claims 1 to 3, wherein
the communication hole has a coplanar with the inner surface of the cover member.

5. The protection element according to claim 1, wherein
the circular protrusion is connected to the inner surface of the cover member by a columnar supporting member.
